# EUROPEAN PATENT APPLICATION

(11) **EP 1 865 708 A2**
(43) Date of publication of application: **12.12.2007**
(21) Application number: 07108696.1
(22) Date of filing: 22.05.2007
(51) Int. Cl.: H04N 5/00

(54) **Open cable broadcast processing apparatus and control method thereof**

(30) Priority: 09.06.2006 KR 20060051942
(71) Applicant: SAMSUNG ELECTRONICS CO., LTD., Suwon-si Gyeonggi-do 442-742 (KR)
(72) Inventor: Lee, Doo-hee, Suwon-si, Gyeonggi-do (KR); Nam, Kyung-chul, Yeongtong-gu, Suwon-si, Gyeonggi-do (KR); Kim, Mun-seok, Yeongtong-gu, Suwon-si, Gyeonggi-do (KR)
(74) Representative: Perkins, Dawn Elizabeth

(57) **Abstract**

An open cable broadcast processing apparatus which includes a tuner is provided. The apparatus further includes: a signal processor which selectively processes at least one media data received through a broadcasting signal based on media setting information; an interface which outputs a tuning command according to a channel changing command of an application when the application is received; and a controller which prestores media identification information on at least one media data supplied through respective channels, controls the tuner to change a first channel to the second channel according to the tuning command output from the interface, and sets the media setting information to process reference media data among the at least one media data received through the other channel, based on the media identification information. Thus, the open cable broadcast processing apparatus can reduce time to change a channel by an application.

## Description

Apparatuses and methods consistent with the present invention relate to an open cable broadcast processing, and more particularly, to an open cable broadcast processing apparatus which reduces time to change a channel by an application, and a control method thereof.

Digital broadcasting using satellites, terrestrial waves or cables has been globally expanded. Also, there have been growing demands for a digital broadcasting processing apparatus which ports middleware and provides high specification, other than general digital broadcast processing apparatuses having simple audio and video functions.

The middleware is largely classified into a standard type and a non-standard type. The non-standard type comprises an open TV, Media Highway, Liberate, etc. The standard type comprises a multimedia home platform (MHP), a DTV application software environment (DASE), an advanced television enhancement form (ATVEF), an open cable application platform (OCAP), etc.

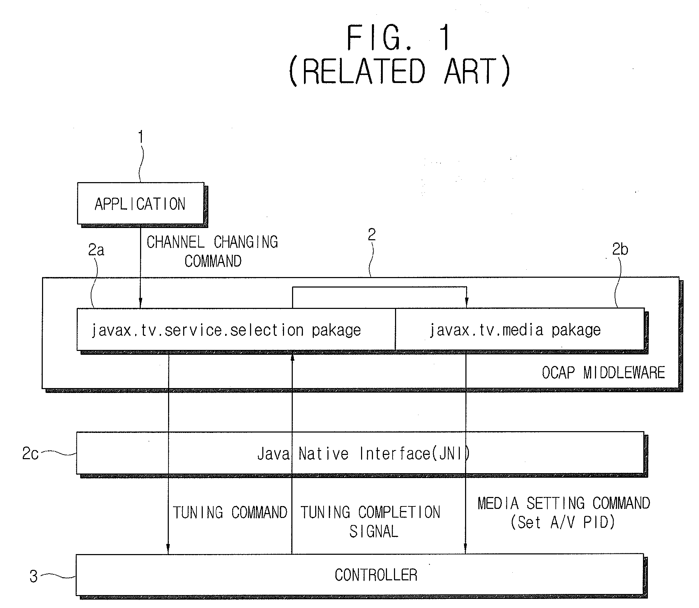

A process of changing one channel to another channel by an application which is received through a broadcasting signal, in a related art open cable broadcast processing apparatus according to the OCAP will be described with reference to Figure 1.

First, the configuration of the open cable broadcast processing apparatus according to OCAP will be described. The open cable broadcast processing apparatus comprises an open cable application platform (OCAP) middleware 2 which supports OCAP standards; a controller 3 which controls the open cable broadcast processing apparatus; and a java native interface (JNI) 2c which interfaces between the controller 3 and the OCAP middleware 2. The OCAP middleware 2 is an interface defined by the OCAP standard. The OCAP middleware 2 allows data communication between a transmission system transmitting a broadcasting signal and the open cable broadcast processing apparatus. The OCAP middleware 2 is divided into packages according to its functions. The OCAP middleware 2 comprises a javax.tvservice.selection package 2a, which performs a physical tuning function by an application 1, and a javax.tv.media package 2b which performs a media setting function by the application 1.

When the application 1 transmitted by the transmission system commands to change a channel of a service being currently provided by the open cable broadcast processing apparatus, i.e., change to another channel different from the current channel to provide media to a viewer, the javax.tv.service.selection package 2a of the OCAP middleware 2 outputs a tuning command according to a channel changing command of the application 1 to the controller 3 through the JNI 2c, thereby requesting the controller 3 to perform the tuning function. Then, the controller 3 controls a tuner (not shown) to tune a frequency to change the current channel. The frequency tuning of the tuner refers to a physical channel change.

When the tuner completes the physical channel change, the controller 3 outputs a tuning completion signal to the javax.tv.service.selection package 2a of the OCAP middleware 2 through the JNI 2c to inform the completion of the physical tuning. The javax.tv.service.selection package 2a receives the tuning completion signal and informs the javax.tv.media package 2b of the tuning completion. The javax.tv.media package 2b recognizes the completion of the physical tuning, and outputs a media setting command to the controller 3 through the JNI 2c to process audio data and video data (e.g., video data 1 and audio data 2) according to the channel change command of the application 1 among a plurality of media data (e.g., video data 1, audio data 1, audio data 2 and audio data 3) which are received through the other channel by the physical frequency tuning, thereby requesting the media setting operation to the controller 3. The controller 3 controls a signal processor (not shown) to process and output the video data 1 and audio data 2 according to the set media setting information among the plurality of media data received through the other channel.

As described above, the OCAP middleware 2 is divided into the javax.tv.service.selection package 2a to control the physical tuning function, and the javax.tv.media package 2b to control the media setting function. The OCAP middle ware 2 performs the physical tuning operation first and then performs the media setting operation. Thus, even if the controller 3 already recognizes the media data on the other channel through service information (SI), the OCAP middleware 2 performs the media setting operation after performing the physical tuning operation, thereby taking too much time in changing to the other channel.

Accordingly, it is an aspect of the present invention to provide an open cable broadcast processing apparatus which reduces time to change one channel to another channel by an application, and a control method thereof.

Aspects and/or advantages of the present invention will be set forth in part in the description which follows and, in part, will be obvious from the description, or may be learned by practice of the present invention.

The foregoing and/or other aspects of the present invention are also achieved by providing an open cable broadcast processing apparatus which comprises a tuner, further comprising: a signal processor which selectively processes at least one media data, received through a broadcasting signal, based on media setting information; an interface which outputs a tuning command according to a channel changing command of an application when the application is received; and a controller which prestores media identification information on at least one media data supplied through respective channels, controls the tuner to change a first channel to the second channel according to the tuning command output from the interface, and sets the media setting information to process reference media data among the at least one media data received through the second channel, based on the media identification information.

According to an aspect of the present invention, the controller prestores reference media identification information corresponding to the reference media data, and sets the media setting information to process the reference media data corresponding to the reference media identification information of the second channel, among the at least one media data received through the second channel.

According to an aspect of the present invention, the at least one media data comprises at least one of video data and audio data.

According to an aspect of the present invention, the controller outputs a tuning completion signal to the interface when the first channel is changed to the second channel according to the tuning command, and the interface outputs a media setting command to the controller according to the channel changing command of the application when the tuning completion signal is received.

According to an aspect of the present invention, the controller compares media data according to the media setting command and the reference media data corresponding to the reference media identification information when the media setting command is received, and resets the media setting information of the signal processor with the media data according to the media setting command if the media data according to the media setting command and the reference media data set by the signal processor are different from each other.

According to an aspect of the present invention, the interface comprises an open cable application platform (OCAP) middleware which includes a service setter to output the tuning command according to the channel changing command of the application, and a media setter to output the media setting command according to the channel changing command of the application when the tuning completion signal is received.

According to an aspect of the present invention, the controller prestores service information (SI) having media identification information by channel.

According to an aspect of the present invention, the controller controls the signal processor to perform a mute operation when the tuning command is received from the interface, and controls the signal processor not to perform the mute operation after setting the media setting information with the reference media data.

The foregoing and/or other aspects of the present invention are also achieved by providing a method of controlling an open cable broadcast processing apparatus which comprises a tuner and a signal processor to selectively process at least one media data, received through a broadcasting signal, based on media setting information, comprising: storing media identification information on at least one media data supplied through respective channels, in a controller; outputting a tuning command to the controller according to a channel changing command of an application from an interface which receives the application; controlling the tuner to change a first channel to the second channel according to the tuning command from the controller receiving the tuning command; and setting the media setting information with reference media data among the at least one media data received through the second channel, based on the media identification information.

According to an aspect of the present invention, the method further comprises: storing reference media identification information corresponding to the reference media data, in the controller; wherein the setting media setting information comprises setting the media setting information to process the reference media data corresponding to the reference media identification information of the second channel, among the at least one media data received through the second channel.

According to an aspect of the present invention, the at least one media data comprises at least one of video data and audio data.

According to an aspect of the present invention, the method further comprises: outputting a tuning completion signal from the controller to the interface when the first channel is changed to the second channel according to the tuning command; and outputting a media setting command according to the channel changing command of the application from the interface receiving the tuning completion signal, to the controller.

According to an aspect of the present invention, the method further comprises: comparing media data according to the media setting command and the reference media data corresponding to the reference media identification information, by the controller receiving the media setting command; and resetting the media setting information of the signal processor with the media data according to the media setting command if the media data according to the media setting command and the reference media data are different from each other.

According to an aspect of the present invention, the interface comprises an open cable application platform (OCAP) middleware which comprises a service setter to output the tuning command and a media setter to output the media setting command.

According to an aspect of the present invention, the method further comprises: controlling the signal processor to perform a mute operation when the tuning command is received from the interface; and controlling the signal processor not to perform the mute operation after setting the media setting information with the reference media data.

The above and/or other aspects of the present invention will become apparent and more readily appreciated from the following description of the embodiments, taken in conjunction with the accompanying drawings, in which:
Figure 1 is a block diagram of a related art open cable broadcast processing apparatus illustrating a channel change by an application;
Figure 2 is a control block diagram of an open cable broadcast processing apparatus according to an exemplary embodiment of the present invention;
Figure 3 is a partial block diagram of the open cable broadcast processing apparatus illustrating a channel change by an application according to an exemplary embodiment of the present invention; and
Figure 4 is a control flowchart of the open cable broadcast processing apparatus in which a channel is changed by the application according to an exemplary embodiment of the present invention.

Reference will now be made in detail to exemplary embodiments of the present invention, examples of which are illustrated in the accompanying drawings, wherein like reference numerals refer to like elements throughout.

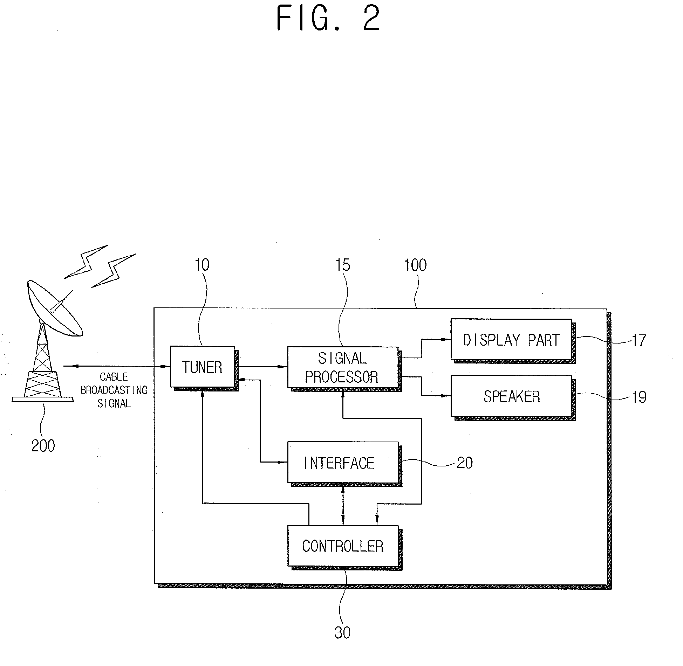

As shown in Figure 2, an open cable system according to an exemplary embodiment of the present invention comprises a transmission system 200 and an open cable broadcast processing apparatus 100.

The transmission system 200 relays a signal to cable-broadcast. Head-end is a typical example of the transmission system 200. The transmission system 200 may transmit a cable broadcasting signal for cable-broadcasting. The cable broadcasting signal transmitted by the transmission system 200 comprises a cable broadcasting program which is transmitted through an in-band (IB); and out-of-band (OOB) data which is transmitted through an OOB. The OOB data comprises command data to control the transmission system 200 and the open cable broadcast processing apparatus 100; and additional information (e.g., text broadcasting, VOD, etc.) on broadcasting programs.

The transmission system 200 may transmit an application having a channel changing command through the cable broadcasting signal, to provide viewers with media such as video on demand (VOD) service or breaking news service through another channel which is not a currently-viewed channel of the open cable broadcast processing apparatus 100. The application commanding the channel change comprises commands to tune a frequency of the other channel physically and to set media data to be provided to a viewer by processing among media data received through the other channel. Preferably, but not necessarily, the media data comprises at least one of video data and audio data.

The open cable broadcast processing apparatus 100 comprises a tuner 10, a signal processor 15, a display part 17, a speaker 19, an interface 20 and a controller 30. The open cable broadcast processing apparatus 100 may be a digital cable ready (DCR) TV, a DCR set-top box, or the like as an example.

The tuner 10 tunes a cable broadcasting signal of a channel according to a control of the controller 30, among a plurality of channels transmitted by the transmission system 200. The tuner 10 may comprise an in-band channel tuner to receive in-band cable broadcasting programs of the frequency bandwidth of the cable broadcasting signals; and an out-of-band (OOB) channel tuner to receive OOB data of the OOB. The OOB data may comprise command data to command the channel change; and additional information (text broadcasting, VOD text data, electronic program guide data, service communication, authorization data, etc) on a broadcasting program.

The signal processor 15 selectively processes at least one media data received through the tuner 10, based on preset media setting information. That is, the signal processor 15 has the media setting information (e.g., video data 1, audio data 2) on the media data to be processed and outputted to the display part 17 and the speaker 19 among the plurality of media data (e.g., video data 1, audio data 1, audio data 2 and audio data 3) received through a current channel. The signal processor 15 processes and outputs the media data (e.g., video data 1 and audio data 2) based on the preset media setting information among the plurality of media data received through the tuner 10, to the display part 17 and the speaker 19.

The signal processor 15 may comprise a demodulator (not shown) which demodulates the media data of the cable broadcasting program of a channel tuned by the tuner 10; an OOB demodulator (not shown) which demodulates the OOB data received by the tuner 10; a transport (TP) demultiplexer (not shown) which demultiplexes the media data or the OOB data of the descrambled cable broadcasting program, into the audio data, the video data and the OOB data; and a decoder (not shown) which decodes and outputs the video data and the audio data from the TP demultiplexer to the display part 17 and the speaker 19.

The interface 20 allows data communication between the transmission system 200 and the open cable broadcast processing apparatus 100. When the transmission system 200 transmits the application which commands to change a channel to another channel, the interface 20 outputs a tuning command according to the channel changing command of the application to the controller 30. When a tuning completion signal from the controller 30 is received, the interface 20 outputs a media setting command to the controller 30 according to the channel changing command of the application from the transmission system 200.

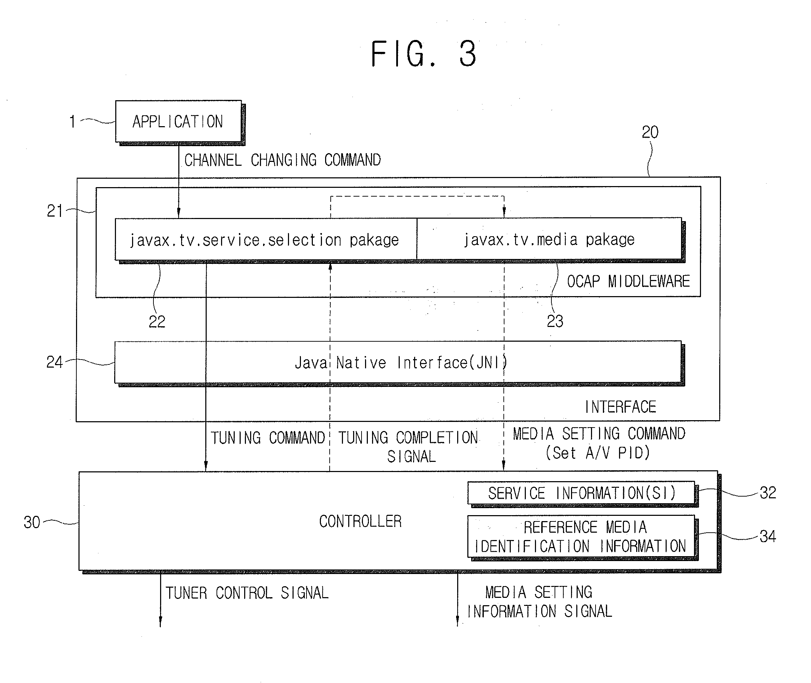

The interface 20 comprises open cable application platform (OCAP) middleware 21 as shown in Figure 3. The interface 20 will be described later with reference to Figure 3.

The controller 30 prestores media identification information on at least one media data supplied through respective channels. More specifically, the controller 30 prestores service information (SI) including the media identification information by channel on at least one media data supplied through the respective channels. Generally, the SI is prestored in the open cable broadcast processing apparatus. Also, the SI is stored in a cable card according to an OCAP standard, which is stored in the open cable broadcast processing apparatus 100. The cable card may be mounted in the open cable broadcast processing apparatus 100. The controller 30 prestores reference media identification information as a default value by channel.

The controller 30 controls the tuner 10 to change a channel to another channel according to the tuning command input from the interface 20. When the channel is changed by a physical frequency tuning of the tuner 10, the controller 30 identifies the type of the media data received through the changed other channel, based on the media identification information corresponding to the changed other channel. The controller 30 sets the media setting information of the signal processor 15 to process reference media data corresponding to the reference media identification information of the changed other channel, among the identified media data.

The signal processor 15 processes the media data (e.g., video data 1 and audio data 2) which accord to the media setting information set by the controller 30, among the media data received through the changed other channel, and outputs the data to the display part 17 and the speaker 19.

When the channel is changed by the physical frequency tuning of the tuner 10, the controller 30 outputs a tuning completion signal to the interface 20. When the media setting command is received from the interface 20, the controller 30 compares media data according to the media setting command and the reference media data set at the signal processor 30 corresponding to the reference media identification information, and does not perform an additional operation if the two data are identical to each other. However, when the media data according to the media setting command and the reference media data set at the signal processor 15 corresponding to the reference media identification information are different from each other, the controller 30 resets the media setting information of the signal processor 15 with the media data according to the media setting command.

Hereinafter, the operation of the interface 20 and the controller 30 will be described with reference to Figure 3.

The interface 20 comprises the OCAP middleware 21 which supports the OCAP standard; and a java native interface (JNI) 24 which interfaces between the controller 30 and the OCAP middleware 21. The OCAP middleware 21 is divided into packages according to its functions. The OCAP middleware 21 comprises a service setter 22 (hereinafter, to be referred to as javax.tv.service.selection package) to perform the physical tuning operation by an application 1 from the transmission system 200; and a media setter 23 (hereinafter, to be referred to as javax.tv.media package) to perform a media setting operation by the application 1. The OCAP middleware 21 may further comprise packages to perform various functions, including an EPG setting package.

The controller 30 controls the open cable broadcast processing apparatus 100. Preferably, but not necessarily, the controller 30 prestores service information (SI) 32 having media identification information by channel on at least one media data supplied through respective channels. The controller 30 prestores reference media identification information 34 by channel, as a default value.

When the application 1 to command to change the channel is received from the transmission system 200, the javax.tv.service.selection package 22 of the OCAP middleware 21 outputs a tuning command according to the channel changing command of the application 1 to the controller 30 through the JNI 24, thereby requesting the controller 30 to perform the tuning operation. When the tuning command is received from the javax.tv.service.selection package 22 of the OCAP middleware 21, the controller 30 outputs a tuner control signal to control the tuner 10, thereby changing the channel according to the tuning command. Preferably, but not necessarily, the controller 30 controls the signal processor 15 to perform a mute operation, as well as outputting the tuner control signal. While the controller 30 controls to change the channel through communication with the interface 20, the display part 17 displays a mute image thereon.

When the channel is changed by the physical frequency tuning of the tuner 10, the controller 30 identifies the type of media data (e.g., video data 1, video data 2, audio data 1, audio data 2 and audio data 3) corresponding to the changed other channel (e.g., channel 7) based on the SI 32. After identifying the media data to be received through the changed other channel, the controller 30 outputs a media setting information signal to set the media setting information of the signal processor 15 and to process the reference media data of reference media (e.g., video data 2 and audio data 1) corresponding to the changed other channel (e.g., channel 7), among the media data identified through the reference media identification information 34. The reference media identification information 34 corresponding to the respective channel comprises media data as a reference default value among various media data supplied through the respective channel. The reference media identification information 34 can be amended by a user manipulation.

After setting the media setting information of the signal processor 15, the controller 30 controls the signal processor 15 not to perform the mute operation. Then, the mute image is removed from the display part 17.

Then, the signal processor 15 processes the media data (e.g., video data 2 and audio data 1) according to the media setting information set by the controller 30 among the media data received through the changed other channel (e.g., channel 7), and outputs them to the display part 17 and the speaker 19.

The open cable broadcast processing apparatus 100 according to an exemplary embodiment of the present invention performs the physical tuning operation according to the channel changing command of the application to change the channel and then performs the media setting operation through the prestored SI, instead of through the OCAP middleware, thereby reducing time to change the channel.

When the channel is changed by the physical frequency tuning of the tuner 10, the controller 30 outputs the tuning completion signal to the javax.tv.service.selection package 22 of the OCAP middleware 21 through the JNI 24, thereby informing the completion of the physical tuning operation. Then, the javax.tv.service.selection.package 22 of the OCAP middleware 21 informs the javax.tv.media package 23 of the completion of the physical tuning operation. Then, the javax.tv.media package 23 outputs the media setting command to the controller 30 through the JNI 24 to process the media data (e.g., video data 2 and audio data 1) according to the channel changing command of the application 1, among the plurality of media data (e.g., video data 1, video data 2, audio data 1, audio data 2 and audio data 3) received through the other channel changed by the physical frequency tuning.

The controller 30 compares the media data (e.g., video data 2 and audio data 1) according to the media setting command received from the javax.tv.media package 23 of the OCAP middleware 21, and the reference media data (e.g., video data 2 and audio data 1) set at the signal processor 15 corresponding to the reference media identification information 34. When the two media data are identical to each other, the controller 30 does not perform an additional operation. When the media data according to the media setting command and the reference media data set at the signal processor 15 corresponding to the reference media identification information 34 are different from each other, the controller 30 resets the media setting information of the signal processor 15 with the media data according to the media setting command.

The open cable broadcast processing apparatus 100 according to an exemplary embodiment of the present invention performs the physical tuning operation according to the channel changing command of the application 1 to change the channel, and then performs the media setting operation by using the SI, instead of through the OCAP middleware, thereby maintaining reliability in changing the channel.

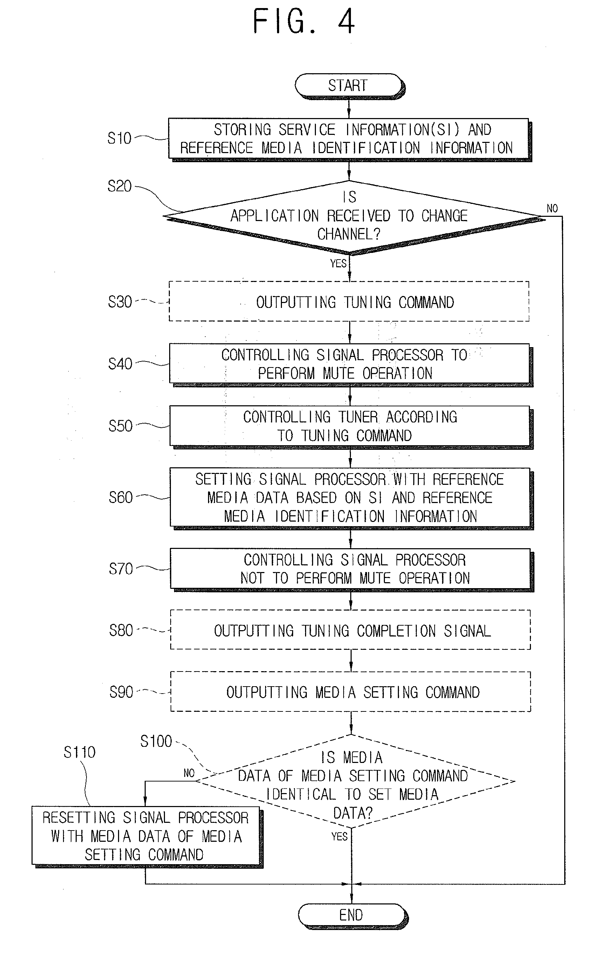

Hereinafter, a control flow of changing a channel to another channel by the application 1 in the open cable broadcast processing apparatus 100 according to an exemplary embodiment of the present invention will be described with reference to Figure 4. For a convenience for explanation, reference numbers of Figure 2 and Figure 3 is mentioned.

The controller 30 of the open cable broadcast processing apparatus 100 prestores the SI 32 having the media identification information by channel on at least one media data supplied through the respective channel; and the reference media identification information 34 as the default value of the respective channels (S10).

The interface 20 determines whether the application 1 commanding the channel change is transmitted from the transmission system 200 (S20). When the application 1 to change the channel is received, the OCAP middleware 21 of the interface 20 outputs the tuning command (e.g., channel 7) according to the channel changing command of the application 1 (S30). The controller 30 receives the tuning command from the OCAP middleware 21, and controls the signal processor 15 to perform the mute operation (S40). Also, the controller 30 controls the tuner 10 to change the channel according to the tuning command (S50). The sequence of operations of S40 and S50 may be changed.

When the channel is changed by the physical frequency tuning of the tuner 10 according to the control of the controller 30, the controller 30 identifies the type of the media data (e.g., video data 1, video data 2, audio data 1, audio data 2 and audio data 3) to be received corresponding to the changed other channel (e.g., channel 7) based on the SI 32. The controller 30 sets the media setting information of the signal processor 15 to process the reference media data of the reference media (e.g., video data 2 and audio data 1) corresponding to the changed other channel (e.g., channel 7) among the identified media data, based on the reference media identification information 34 (S60).

After setting the media setting information of the signal processor 15, the controller 30 controls the signal processor 15 not to perform the mute operation (S70). Then, the mute image may be removed from the display part 17. The signal processor 15 processes the media data (e.g., video data 2 and audio data 1) according to the media setting information set by the controller 30, among the media data received through the changed other channel (e.g., channel 7), and outputs them to the display part 17 and the speaker 19.

When the channel is changed by the physical frequency tuning of the tuner 10, the controller 30 outputs the tuning completion signal to the OCAP middleware 21 and informs the completion of the physical tuning operation (S80). Then, the OCAP middleware 21 recognizes the completion of the physical tuning operation, and outputs the media setting command to the controller 30 to process the media data (e.g., video data 2 and audio data 1) according to the channel changing command of the application 1, among the plurality of media data (e.g., video data 1, video data 2, audio data 1, audio data 2 and audio data 3) received through the other channel (e.g, channel 7) changed by the physical frequency tuning (S90).

Then, the controller 30 compares the media data (e.g., video data 2 and audio data 1) according to the media setting command received from the OCAP middleware 21, and the reference media data (e.g., video data 2 and audio data 1) set at the signal processor 15 corresponding to the reference media identification information (S100). When determined that the media data according to the media setting command and the reference media data are identical to each other, the controller 30 does not perform an additional operation. However, when determined that the two media data are different from each other, the controller 30 resets the media setting information of the signal processor 15 with the media data according to the media setting command (S110).

As described above, in the method of controlling the open cable broadcast processing apparatus, the physical tuning operation is performed according to the channel changing command of the application 1 to change a channel to another channel, and then the media setting operation is performed by using the prestored SI instead of through the OCAP middleware, thereby reducing time in changing the channel.

As described above, the present invention provides an open cable broadcast processing apparatus which reduces time to change a channel to another channel by performing a physical tuning operation according to a channel changing command of an application and then by performing a media setting operation without OCAP middleware, and a control method thereof.

Although a few exemplary embodiments of the present invention have been shown and described, it will be appreciated by those skilled in the art that changes may be made in these exemplary embodiments without departing from the scope of the invention as defined in the appended claims.

## Claims

1. An open cable broadcast processing apparatus comprising:
a tuner (10);
a signal processor (15) configured to selectively process media data, received through a broadcasting signal, based on media setting information;
an interface (20) configured to output a tuning command according to a channel changing command; and
a controller (30) having media identification information stored therein, the media identification information being related to media data supplied through respective channels, wherein the controller (30) is configured to control the tuner (10) to change a first channel to a second channel according to the tuning command output from the interface (20), and set the media setting information to process reference media data among the media data received through the second channel, based on the media identification information.

2. The open cable broadcast processing apparatus according to claim 1, wherein the controller (30) has reference media identification information corresponding to the reference media data stored therein, and is configured to set the media setting information to process the reference media data corresponding to the reference media identification information of the second channel, among the media data received through the second channel.

3. The open cable broadcast processing apparatus according to claim 1 or 2, wherein the media data comprises at least one of video data and audio data.

4. The open cable broadcast processing apparatus according to any one of the preceding claims,
wherein the controller (30) is configured to output a tuning completion signal to the interface (20) when the first channel is changed to the second channel according to the tuning command, and
wherein the interface (20) is configured to output a media setting command to the controller (30) according to the channel changing command of the application when the tuning completion signal is received.

5. The open cable broadcast processing apparatus according to claim 4, wherein the controller (30) is configured to compare media data according to the media setting command and the reference media data corresponding to the reference media identification information when the media setting command is received, and reset the media setting information of the signal processor (15) with the media data according to the media setting command if the media data according to the media setting command and the reference media data are different from each other.

6. The open cable broadcast processing apparatus according to claim 4 or 5, wherein the interface (20) comprises an open cable application platform (OCAP) middleware which comprises a service setter (22) configured to output the tuning command, and a media setter (23) configured to output the media setting command.

7. The open cable broadcast processing apparatus according to any one of the preceding claims, wherein the controller (30) is configured to control the signal processor (15) to perform a mute operation when the tuning command is received from the interface (20), and control the signal processor (15) not to perform the mute operation after setting the media setting information with the reference media data.

8. The open cable broadcast processing apparatus according to any one of the preceding claims, wherein the controller (30) includes service information (SI) stored therein comprising media identification information by channel.

9. A method of controlling an open cable broadcast processing apparatus which comprises a tuner (10) and a signal processor (15) to selectively process media data received through a broadcasting signal, based on media setting information, comprising:
storing media identification information related to media data supplied through respective channels, in a controller (30);
outputting a tuning command to the controller (30), according to a channel changing command of an application, from an interface (30);
controlling the tuner (10) to change a first channel to the second channel according to the tuning command from the controller (30) receiving the tuning command; and
setting the media setting information with reference media data among the media data received through the second channel, based on the media identification information.

10. The method according to claim 9, further comprising storing reference media identification information corresponding to the reference media data, in the controller (30),
wherein the setting media setting information comprises setting the media setting information to process the reference media data corresponding to the reference media identification information of the second channel, among the media data received through the second channel.

11. The method according to claim 9 or 10, wherein the media data comprises at least one of video data and audio data.

12. The method according to any one of claims 9 to 11, further comprising:
outputting a tuning completion signal from the controller (30) to the interface (20) when the first channel is changed to the second channel according to the tuning command; and
outputting a media setting command according to the channel changing command of the application from the interface (20) receiving the tuning completion signal, to the controller (30).

13. The method according to claim 12, further comprising:
comparing media data according to the media setting command and the reference media data corresponding to the reference media identification information, by the controller (30) receiving the media setting command; and
resetting the media setting information of the signal processor with the media data according to the media setting command if the media data according to the media setting command and the reference media data are different from each other.

14. The method according to claim 12 or 13, wherein the interface (20) comprises an open cable application platform (OCAP) middleware which comprises a service setter (22) to output the tuning command and a media setter (23) to output the media setting command.

15. The method according to any one of claims 9 to 14, further comprising:
controlling the signal processor (15) to perform a mute operation when the tuning command is received from the interface (20); and
controlling the signal processor (15) not to perform the mute operation after setting the media setting information with the reference media data.
